(19) Europäisches Patentamt
European Patent Office
Office européen des brevets

(11) Numéro de publication : 0 349 366 B1

(12) FASCICULE DE BREVET EUROPEEN

(45) Date de publication du fascicule du brevet : 11.12.91 Bulletin 91/50

(51) Int. Cl.$^5$ : F16D 51/20, F16D 65/22

(21) Numéro de dépôt : 89401656.7

(22) Date de dépôt : 14.06.89

# (54) Frein à tambour à pose différée du câble de commande mécanique.

(30) Priorité : 27.06.88 FR 8808586
20.01.89 FR 8900654

(43) Date de publication de la demande : 03.01.90 Bulletin 90/01

(45) Mention de la délivrance du brevet : 11.12.91 Bulletin 91/50

(84) Etats contractants désignés : DE ES FR GB IT

(56) Documents cités :
EP-A- 0 142 421
EP-A- 0 311 346
EP-A- 0 315 313
FR-A- 2 020 708

(56) Documents cités :
FR-A- 2 033 148
FR-A- 2 303 197
US-A- 3 064 767
US-A- 4 146 117

(73) Titulaire : BENDIX EUROPE Services Techniques S.A.
126 rue de Stalingrad
F-93700 Drancy (FR)

(72) Inventeur : Maligne, Jean-Charles
BENDIX EUROPE 126 rue de Stalingrad
F-93700 Drancy (FR)

(74) Mandataire : Lejet, Christian et al
Bendix Europe Service Techniques Service Brevets 126 rue de Stalingrad
F-93700 Drancy (FR)

EP 0 349 366 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne des freins à tambour à deux segments présentant chacun une âme et une jante dont la face en regard du tambour reçoit une garniture de friction. Un tel frein à tambour est généralement disposé sur une plaque support, et inclue en outre un levier de commande mécanique comportant un corps de longueur notable et d'épaisseur faible par rapport à sa largeur et disposé entre l'âme et la plaque-support. Ce corps présente, à une première extrémité, une ouverture prévue pour recevoir une liaison articulée avec l'âme de l'un des segments, en un point intermédiaire proche de cette ouverture, une encoche prévue pour coopérer avec une entretoise permettant de solliciter en écartement les segments, et, à la seconde extrémité, un point d'accrochage du câble de manoeuvre du levier, le câble étant pourvu d'une virole à son extrémité coopérant avec le levier.

De tels freins à tambour sont bien connus de l'Homme de l'Art. Le document EP-A-0142421 décrit, par exemple, un levier de commande mécanique pour un tel frein, tel que visé au préambule de la revendication 1. Toutefois, selon l'enseignement de ce document, le câble de commande du levier doit être monté sur le frein en phase finale d'assemblage de ce dernier. Il est ensuite d'usage de faire une ou plusieurs boucles avec le câble pour éviter que ce dernier gêne trop lors du montage du frein sur le chassis du véhicule. Cependant, de telles boucles restent une gêne pour le constructeur d'automobiles et il est souhaitable que la pose du câble puisse être différée jusqu'à ce que toutes les pièces du chassis de l'automobile aient été assemblées et que le câble puisse être fixé à ses deux extrémités.

La présente invention a donc pour objet un frein à tambour à pose différée du câble de commande mécanique.

Selon l'invention, la face du corps du levier en regard de l'âme du segment étant substantiellement plane entre la dite première extrémité et un point intermédiaire proche de la dite seconde extrémité, en ce dernier point, le dit corps est plié de manière à déterminer une partie s'écartant sensiblement de la dite âme, le point d'accrochage étant réalisé en repliant la partie extrême de la seconde extrémité de telle manière qu'elle vienne se loger entre l'âme et la partie s'écartant sensiblement de l'âme, le tout de telle manière qu'entre sensiblement le dit point intermédiaire proche de la seconde extrémité et cette dernière, l'écartement entre l'âme et la partie du corps en regard de l'âme soit sensiblement supérieur au diamètre du câble et inférieur à celui de la virole.

De préférence, au niveau du point d'accrochage, la seconde extrémité du corps présente un retrait déterminant un espace suffisant entre la face de la jante ne comportant pas de garniture de fraction et le corps lorsque le levier est en position pour recevoir la virole dont est pourvu le câble.

De préférence aussi, le bord de la seconde extrémité du corps opposé au retrait présente un biseau permettant de guider la virole lors de la mise en place du câble.

Selon un mode préféré de réalisation, une gouttière, solidaire de la plaque support, permet de guider la virole vers la seconde extrémité du corps lors de la mise en place du câble.

Pour permettre la pose différée du câble par la seule manipulation de la gaine de protection de ce câble, de préférence on dispose un étrésillon sur le câble de manoeuvre entre la virole et l'extrémité intérieure du ressort de protection du câble.

De préférence, cet étrésillon est constitué par un tube cylindrique sensiblement rigide formant poussoir s'étendant entre la virole et l'extrémité intérieure du ressort et dont le diamètre est inférieur à l'écartement entre l'âme du segment et la partie du corps du levier en regard de cette âme. Il peut toutefois être également constistué par une rondelle sertie ou frettée sur le câble à une distance déterminée de la virole.

La présente invention sera mieux comprise, et d'autres buts, objets et avantages apparaîtront plus clairement à la lecture de la description qui suit d'un mode préféré de réalisation donné à titre non limitatif, et à laquelle sont jointes trois planches de dessins sur lesquelles :

- la Figure 1 représente une vue de face d'un frein à tambour réalisé conformément à la présente invention ;
- les Figures 2a et b représentent respectivement vu de face et vu de profil un levier réalisé selon l'invention ;
- la Figure 3 représente une vue en coupe selon la ligne 3-3 de la Figure 1, et
- les Figures 4 et 5 représentent schématiquement deux modes de réalisation de l'étrésillon selon l'invention.

Le frein à tambour représenté Figure 1 comporte une plaque support 10 qui reçoit en coulissement deux segments 12 et 14 comportant chacun une âme 16 et une jante 18, cette dernière recevant des garnitures de friction 20. Ces garnitures de friction 20 sont susceptibles d'entrer en engagement de friction avec un tambour tournant (non représenté) au travers d'un moteur de frein 22 placé entre deux extrémités adjacentes 24 et 26 des segments 12 et 14 respectivement. Les deux autres extrémités 28 et 30 des segments prennent appui sur une pièce d'ancrage 32 au moyen d'un ressort 8, la pièce d'ancrage 32 étant solidaire de la plaque support 10. De même un ressort (non représenté) maintient les extrémités 24 et 26 des segments en appui sur le moteur de frein 22.

D'une façon conventionnelle en freinage manuel, l'actionnement du frein est réalisé au travers d'un dispositif de commande mécanique comprenant un levier 34 articulé par une de ses extrémités 36 sur le segment 14 et plus précisément à proximité de l'extrémité 26 de celui-ci au moyen d'un axe formant pivot 38. L'autre extrémité libre 40 du levier 34 coopère avec un câble de manoeuvre 54 relié à un levier situé dans l'habitacle (non représenté). D'une façon conventionnelle le levier 34 coopère avec une entretoise 62 pour solliciter en écartement les extrémités 24 et 26 des segments. L'entretoise 62 est susceptible de comporter un dispositif de réglage automatique pour compenser l'usure des éléments de friction 20.

En référence maintenant aux Figures 2 où est représenté, respectivement de face et de profil, le levier selon l'invention, le levier 34 est constitué par un corps de longueur notable, par exemple une dizaine de centimètres, et d'épaisseur faible par rapport à sa largeur. Comme on peut le constater Figure 2b, la face du corps en regard de l'âme 16 du segment 14 est substantiellement plane jusqu'au point 42 proche de la seconde extrémité. En ce point 42, le corps est plié de manière à déterminer une partie 44 s'écartant sensiblement de l'âme 16. Le point d'accrochage du câble est alors obtenu en repliant la partie extrême 46 entre la partie 44 et l'âme 16. Le câble ayant vocation à venir se loger dans l'espace 48 ainsi défini et constituant l'encoche d'accrochage, après sa mise en place, il est nécessaire que l'écartement entre l'âme et la seconde extrémité du corps soit tel que le câble lui-même puisse venir se loger dans l'espace 48 après être passé entre la partie extrême 46 et l'âme 16, tandis que la virole qui est, par exemple, sertie à l'extrémité du câble ne puisse en aucun cas passer dans cet espace. De ce fait, l'écartement entre l'âme 16 et la partie du corps en regard de l'âme entre sensiblement le point 42 et la seconde extrémité est sensiblement supérieur au diamètre du câble mais inférieur à celui de la virole.

De préférence, la seconde extrémité du corps comporte un retrait 50 pour déterminer un espace entre la jante (non représenté Fig. 2a) et le corps, prévu pour recevoir la virole lors de la mise en place du câble. Le levier selon l'invention étant prévu pour que le câble puisse venir s'y accrocher sans défaut, il est favorable que le bord 52 de la seconde extrémité, en regard du retrait 50, présente un biseau permettant de guider la virole lors de la mise en place du câble.

Enfin, en référence à la Figure 3, du fait de la forme inchangée de la plaque-support 10 et de l'emplacement de l'orifice 58 d'introduction du câble, on pourra souhaiter disposer une gouttière 56 solidaire de la plaque-support par exemple par l'intermédiaire de la pièce d'ancrage 32 (Figure 1). Cette gouttière favorisera la mise en place du câble et guidera la virole 60 avant que celle-ci atteigne l'âme 16 du segment.

En pratique, le frein étant totalement assemblé à l'exception du câble, puis monté sur le porte fusée de la roue qu'il équipe, le câble est mis en place de la façon suivante.

Dans un premier temps, on fait coulisser au moins partiellement la gaine de protection et le ressort, de manière à mettre à nu une partie du câble. Puis, on introduit la virole par l'orifice 58 prévu à cet effet dans la plaque-support 10. Du fait de la rigidité du câble, la virole atteint la gouttière 56 et est dévié vers l'âme 16 du segment. Elle arrive le long de l'âme 16, jusqu'au bord biseauté 52 du corps du levier qui la guide jusqu'à ce qu'elle entre en contact avec la face de la jante 18 ne portant pas de garniture de friction. L'angle relatif d'attaque entre la virole et la face de la jante permet, grâce à la souplesse et à la rigidité du câble, à la virole de continuer son chemin en remontant (Figure 1) tout en restant au contact de la face de la jante 18. Ce faisant, le câble se cambre et pénètre dans l'espace ménagé entre la seconde extrémité du corps du levier et l'âme. Le mouvement se poursuit alors jusqu'à ce que le câble se présente en regard de l'espace 48 qui constitue l'encoche d'accrochage où il tombe en se redressant. Le câble est alors tiré et la virole vient se placer dans le retrait 50 prévu à cet effet. Le câble étant maintenant tendu, il ne peut plus se cambrer pour ressortir du point d'accrochage. Le ressort peut alors être introduit dans l'orifice, puis la butée de gaine est mise en place pour fermer celui-ci et recevoir la gaine.

Pour permettre la pose différée du câble par la seule manipulation de la gaine de protection de ce câble, on se référera aux Figures 4 et 5 sur lesquelles l'ensemble câble et ressort formant gaine a été représenté avant son introduction dans l'orifice 58 prévu dans la plaque support 10, le câble 54 est protégé par un ressort hélicoïdal 110.

L'orifice 58 est pourvu de la partie femelle d'une butée 120 de gaine dans laquelle vient s'enclipser en position finale la partie mâle de la butée 125 solidaire du ressort 110.

Entre l'extrémité intérieure 115 du ressort 110 et la virole 60, on dispose un étrésillon de manière à maintenir constante cette distance.

Selon le mode de réalisation représenté Figure 4, cet étrésillon est constitué par un tube cylindrique sensiblement rigide 135, l'extrémité 115 du ressort 110 s'appuyant sur une extrémité du tube dont l'autre extrémité s'appuie sur la virole 60. Bien évidemment, il est nécessaire que le diamètre du tube 135 soit tel qu'il puisse pénétrer dans l'encoche d'accrochage prévu sur le levier. Son diamètre est donc inférieur à l'écartement entre l'âme du segment et la partie du corps du levier en regard de cette âme.

Selon le deuxième mode de réalisation représenté Figure 5, cet étrésillon est constitué par une rondelle 140 fixée au câble à la distance appropriée de la virole 60. Cette rondelle 140 peut, bien sur, être sertie ou frettée ou fixée par tout autre moyen connu de l'homme du métier.

En pratique, le frein étant totalement assemblé à l'exception du câble, du ressort et de la gaine, puis monté sur le porte-fusée de la roue qu'il équipe, le câble est mis en place de la façon suivante.

On installe d'abord le ressort sur le câble et celui-ci vient en butée sur l'étrésillon, puis la partie mâle de la butée de la gaine, puis la gaine. L'opérateur introduit alors l'ensemble dans l'orifice 58 en tenant la gaine.

Comme précédemment le mouvement se poursuit et, la virole vient en contact de la face de la jante.

Si l'étrésillon est rigide, il se produit un décollement du levier permettant à la virole de se placer dans le retrait prévu à cet effet, sinon le câble se cambre naturellement et la virole vient se placer dans le retrait.

Ce faisant, la partie mâle 125 de la butée de gaine pénètre dans la partie femelle 120 correspondante solidaire du plateau 10, où elle vient se clipser.

Il ne reste plus alors qu'à tendre le câble de façon conventionnelle puisqu'il est disposé dans le point d'accrochage en toute sécurité.

Comme on a pu le constater, la mise en place du câble peut ainsi être différée jusqu'à la fin de l'assemblage des pièces du chassis et, avec le levier conformément à l'invention, le câble est disposé au point d'accrochage en toute sécurité.

Bien que seul un mode préféré de réalisation de l'invention ait été décrit, il est évident que de nombreuses modifications peuvent y être apportées sans sortir du cadre de l'invention telle que définie dans les revendications ci-après.

## Revendications

1. Frein à tambour à deux segments présentant chacun une âme (16) et une jante (18) dont la face en regard du tambour reçoit une garniture de friction (20), le dit frein à tambour étant disposé sur une plaque-support (10), et incluant en outre un levier de commande mécanique (34) comportant un corps de longueur notable et d'épaisseur faible par rapport à sa largeur et disposé entre la dite âme (16) et la dite plaque-support (10), le dit corps présentant, à une première extrémité (36), une ouverture (38) prévue pour recevoir une liaison articulée avec l'âme (16) de l'un des dits segments (14), en un point intermédiaire proche de la dite ouverture, une encoche prévue pour coopérer avec une entretoise (62) permettant de solliciter en écartement les dits segments (12, 14), et, à la seconde extrémité (40), un point d'accrochage d'un câble de manoeuvre (54) du dit levier, le dit câble étant pourvu d'une virole (60) à son extrémité coopérant avec le dit levier, la face du dit corps en regard de la dite âme (16) étant substantiellement plane entre la dite première extrémité (36) et un point intermédiaire (42) proche de la dite seconde extrémité, le dit frein étant caractérisé en ce qu'en ce dernier point (42), le dit corps est plié de manière à déterminer une partie (44) s'écartant sensiblement de la dite âme (16), le dit point d'accrochage (48) étant réalisé en repliant la partie extrême (46) de la dite seconde extrémité (40) de telle manière qu'elle vienne se loger entre la dite âme (16) et la dite partie (44) s'écartant sensiblement de la dite âme, le tout de telle manière qu'entre sensiblement le dit point intermédiaire (42) proche de la dite seconde extrémité et cette dernière (40), l'écartement entre la dite âme (16) et la partie du dit corps en regard de la dite âme soit sensiblement supérieur au dit diamètre du dit câble (54) et inférieur à celui de la dite virole (60) en ce que, au niveau du point d'accrochage, la dite seconde extrémité (40) du dit corps présente un retrait (50) déterminant un espace suffisant entre la face de la jante (18) ne comportant pas de garniture de friction et le dit corps lorsque le dit levier repose sur la dite jante, pour recevoir la dite virole (60) dont est pourvu le câble (54).

3. Frein à tambour selon la revendication 1 ou 2 caractérisé en ce que le bord (52) de la dite seconde extrémité (40) du dit corps opposé au retrait (50) présente un biseau permettant de guider la dite virole (60) lors de la mise en place du dit câble.

4. Frein à tambour selon l'une quelconque des revendications précédentes caractérisé en ce que une gouttière (56), solidaire de la dite plaque-support (10), permet de guider la dite virole (60) vers la dite seconde extrémité (40) du dit corps lors de la mise en place du dit câble.

5. Frein à tambour selon l'une quelconque des revendications précédentes caractérisé en ce qu'un étrésillon est disposé sur le câble de manoeuvre (54) entre la dite virole (60) et l'extrémité intérieure (115) du ressort de protection (110) du dit câble.

6. Frein à tambour selon la revendication 5, caractérisé en ce que le dit étrésillon est constitué par un tube cylindrique (135) sensiblement rigide s'étendant entre la dite virole (60) et l'extrémité intérieure (115) du dit ressort (110).

7. Frein à tambour selon la revendication 5, caractérisé en ce que le dit étrésillon est constitué par une rondelle (140) fixée au câble à une distance déterminée de la dite virole (60).

## Claims

1. Drum brake with two shoes, each having a web (16) and a rim (18), of which the face confronting the drum receives a friction lining (20), said drum brake being arranged on a supporting plate (10) and also including a mechanical control lever (34) comprising a body of considerable length and of small thickness in relation to its width and located between said web (16) and said support plated (10), said body having, at a first end (36), an orifice (38) intended for receiving an articulated connection with the web (16) of one of said shoes (14) at an intermediate point near the orifice, and a notch intended for interacting with a spacer (62) making it possible to subject shoes (12, 12) to a stress moving them away from one another, and, at the second end (40), a fastening point for an actuating cable (54) of said lever, said cable being equipped with a ferrule (60) at its end interacting with said lever, the face of said body confronting said web (16) being substantially plane between said first end (36) and an intermediate point (42) near the second end, said brake being characterized in that, at this latter point (42), said body is bent so as to define a part (44) diverging substantially from said web (16), said fastening point (48) being formed by bending the end part (46) of said second end (40) in such a way that it comes to rest between said web (16) and said part (44) diverging substantially from said web, all this in such a way that, between substantially said intermediate point (42) near said second end and the latter (40), the divergence between said web (16) and that part of said body confronting said web is substantially greater than said diameter of said cable (54) and less than that of said ferrule (60).

2. Drum brake according to Claim 1, characterized in that, at the fastening point, said second end (40) of said body has an offset (50) defining a sufficient space between that face of the rim (18) not having a friction lining and said body when said lever rests on said rim, in order to receive said ferrule (60) with which the cable (54) is equipped.

3. Drum brake according to Claim 1 or 2, characterized in that the edge (52) of said second end (40) of said body opposite the offset (50) has a bevel making it possible to guide said ferrule (60) during the installation of said cable.

4. Drum brake according to any of the preceding claims, characterized in that a trough (56) fixed to said supporting plate (10) makes it possible to guide said ferrule (60) towards said second end (40) of said body during the installation of said cable.

5. Drum brake according to any of the preceding claims, characterized in that a brace is arranged on the actuating cable (10) between said ferrule (60) and the inner end (115) of the protective spring (110) of said cable.

6. Drum brake according to Claim 5, characterized in that said brace consists of a substantially rigid cylindrical tube (135) extending between said ferrule (60) and the inner end (115) of said spring (110).

7. Drum brake according to Claim 5, characterized in that said brace consists of a washer (140) fastened to the cable at a specific distance from said ferrule (60).

**Patentansprüche**

1. Trommelbremse mit zwei Segmenten, wovon jedes einen Steg (16) sowie eine Felge (18) aufweist, wovon die der Trommel zugewandte Fläche einen Reibungsbelag (20) aufnimmt, wobei diese Trommelbremse auf einer Trägerplatte (10) angeordnet ist und ferner einen mechanischen Steuerhebel (34) enthält, der einen Körper einer beachtlichen Länge und einer Dicke aufweist, welche im Vergleich zu seiner Breite gering ist, und zwischen diesem Steg (16) und dieser Trägerplatte (10) angeordnet ist, wobei ein erstes Ende (36) dieses Körpers eine Öffnung (38) aufweist, die vorgesehen ist, um an einem Zwischenpunkt, der sich in der Nähe dieser Öffnung befindet, eine gelenkige Verbindung mit dem Steg (16) eines der genannten Segmente (14) zu bilden, eine Aussparung, die für die Zusammenarbeit mit einer Strebe (62) vorgesehen ist, die es ermöglicht, diese Segmente (12, 14) zur Spreizung zu beaufschlagen, sowie an dem zweiten Ende (40) einen Einhängpunkt für ein Betätigungsseil (54) dieses Hebels aufweist, wobei dieses Seil an seinem mit diesem Hebel zusammenarbeitenden Ende mit einer Hülse (60) versehen ist, wobei die Fläche dieses dem Steg (16) zugewandten Körpers zwischen diesem ersten Ende (36) und einem Zwischenpunkt (42), der sich in der Nähe des zweiten Endes befindet, im wesentlichen eben ist, und wobei diese Bremse dadurch gekennzeichnet ist, daß an diesem letztgenannten Punkt (42) dieser Körper so gebogen ist, daß er einen Teil (44) bildet, der sich von diesem Steg (16) deutlich enfernt, wobei dieser Einhängpunkt (48) gebildet wird, indem das Endteil (46) dieses zweiten Endes (40) so umgebogen ist, daß es zwischen diesem Steg (16) und diesem Teil (44), der sich von diesem Steg deutlich entfernt, aufgenommen wird, all dies auf solche Weise, daß zwischen im wesentlichen dem Zwischenpunkt (42), der sich in der Nähe dieses zweiten Endes befindet, und diesem Ende (40), die Spreizung zwischen diesem Steg (16) und dem diesem Steg zugewandten Teil dieses Körpers deutlich größer als der Durchmesser des Seils (54) und kleiner als derjenige der Hülse (60) ist.

2. Trommelbremse nach Anspruch 1, dadurch gekennzeichnet, daß auf Höhe des Einhängpunktes das zweite Ende (40) des Körpers einen Rücksprung (50) aufweist, welcher zwischen der Fläche der Felge (18), die keinen Reibungsbelag aufweist, und diesem Körper einen ausreichenden Raum bildet, wenn der Hebel auf dieser Felge ruht, um diese Hülse (60), mit der das Seil (54) vorgesehen ist, aufzunehmen.

3. Trommelbremse nach Anspruch 1 oder 2, dadurch gekennzeichnet, daß der Rand (52) des zweiten Endes (40) des dem Rücksprung (50) zugewandten Körpers eine Abschrägung aufweist, die die Führung der Hülse (60) bei dem Anbringen des Seiles ermöglicht.

4. Trommelbremse nach einem der vorausgehenden Ansprüche, dadurch gekennzeichnet, daß eine mit der Trägerplatte (10) fest verbundene Rinne (56) die Führung der Hülse (60) zum zweiten Ende (40) des Körpers hin bei dem Anbringen des Seiles ermöglicht.

5. Trommelbremse nach einem der vorausgehenden Ansprüche, dadurch gekennzeichnet, daß auf dem Betätigungsseil (54) zwischen der Hülse (60) und dem inneren Ende (115) der Schutzfeder (110) dieses Seiles ein Spreizteil angeordnet ist.

6. Trommelbremse nach Anspruch 5, dadurch gekennzeichnet, daß das Spreizteil aus einem im wesentlichen starren, zylindrischen Rohr (135) besteht, das sich zwischen dieser Hülse (60) und dem inneren Ende (115) dieser Feder (110) erstreckt.

7. Trommelbremse nach Anspruch 5, dadurch gekennzeichnet, daß das Spreizteil aus einer Scheibe (140) besteht, die in einem bestimmten Abstand von der Hülse (60) an dem Seil befestigt ist.

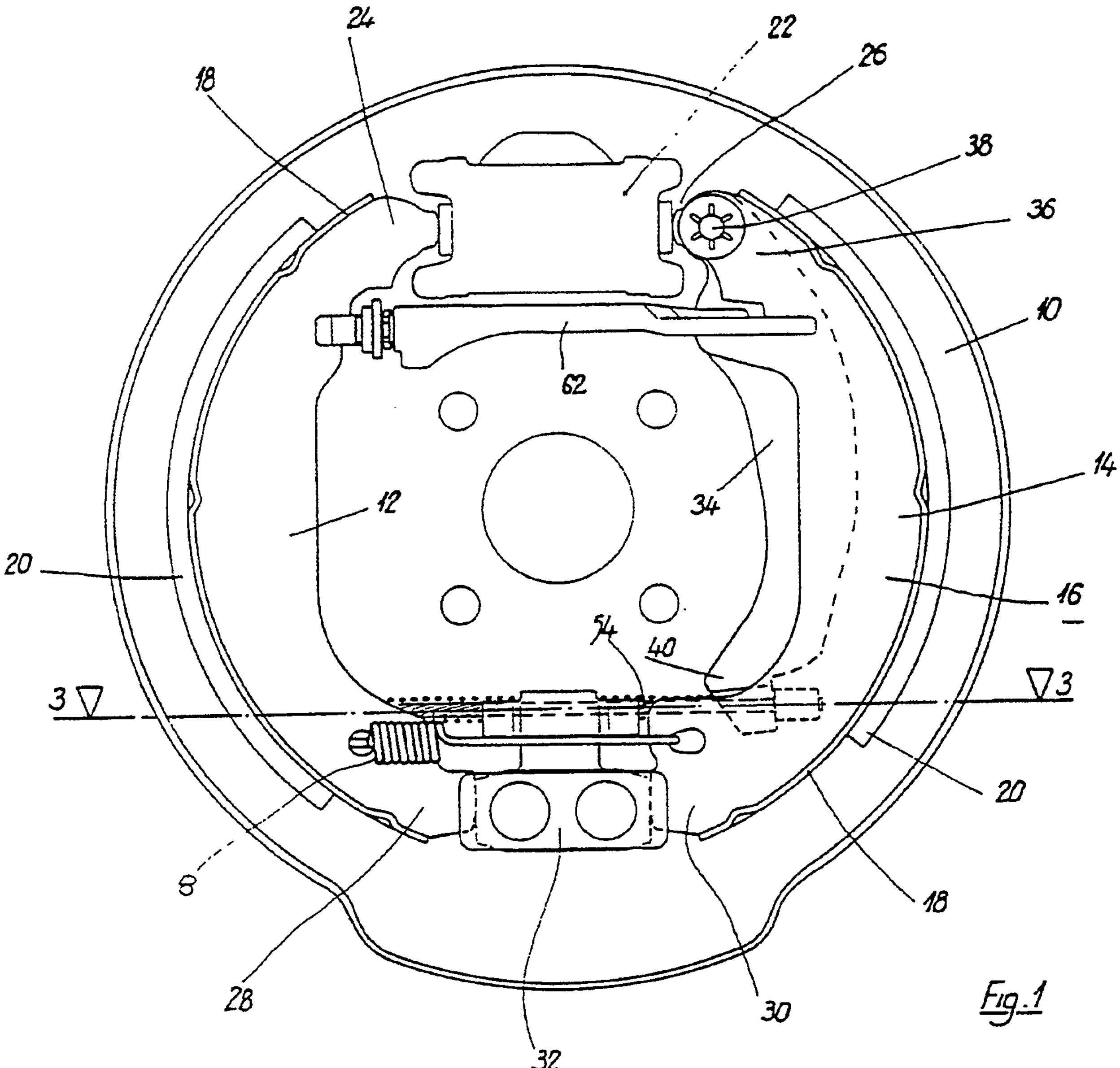
24
22
26
18
38
36
10
62
12
34
14
20
16
54
40
3
3
20
8
18
28
30
32

Fig.1

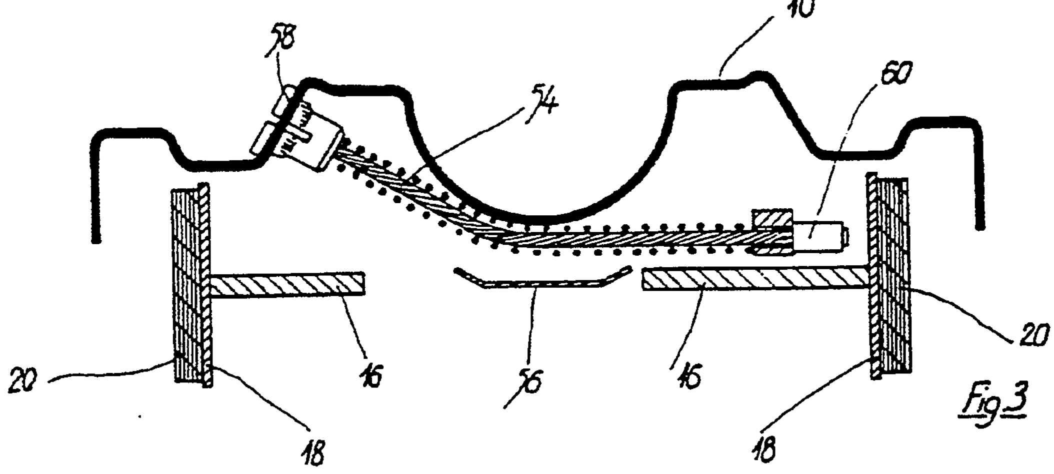
58
10
54
60
16
56
16
20
20
18
18

Fig.3

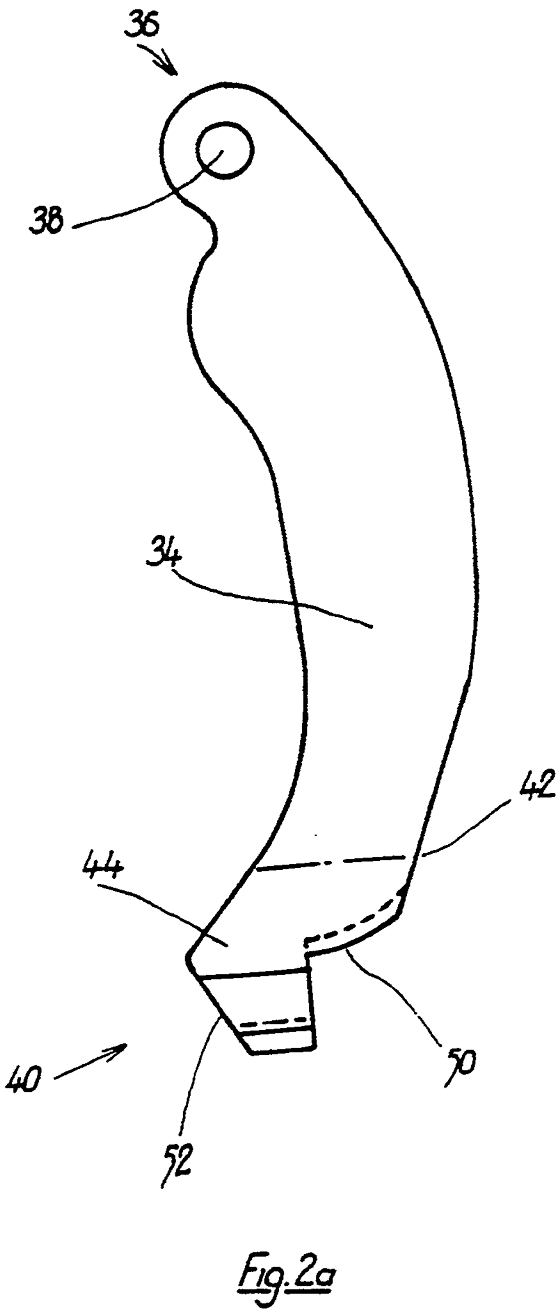


Fig.2a

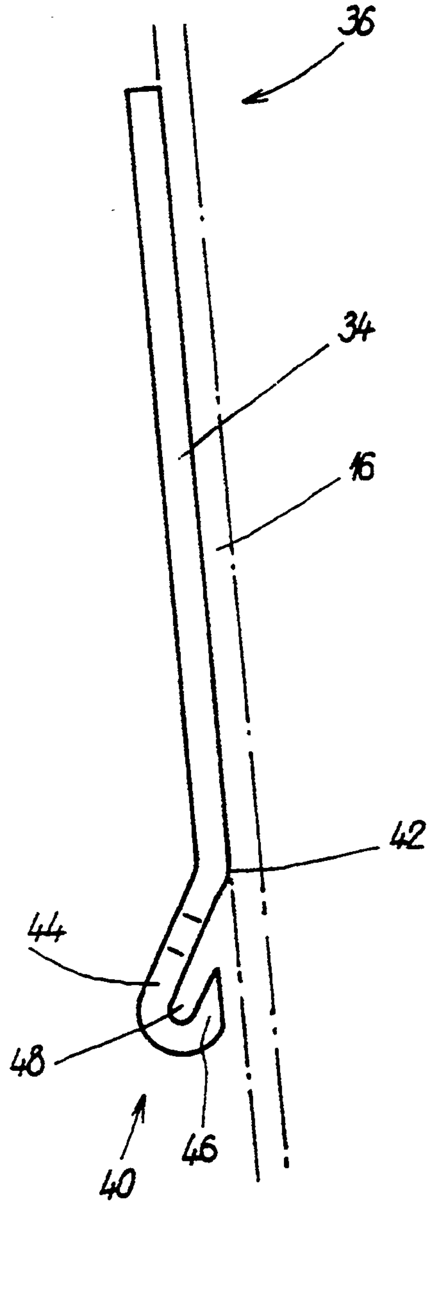


Fig.2b

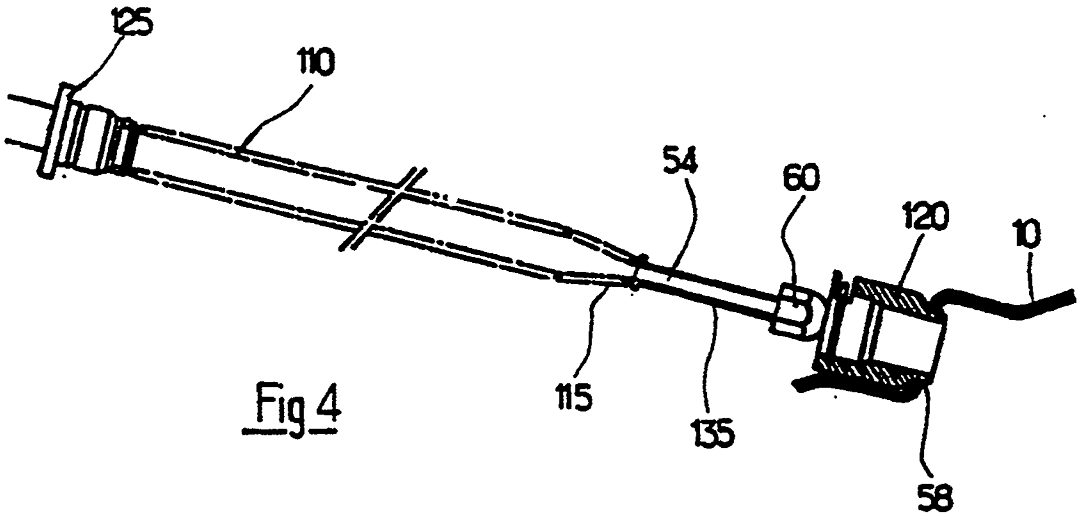


Fig 4

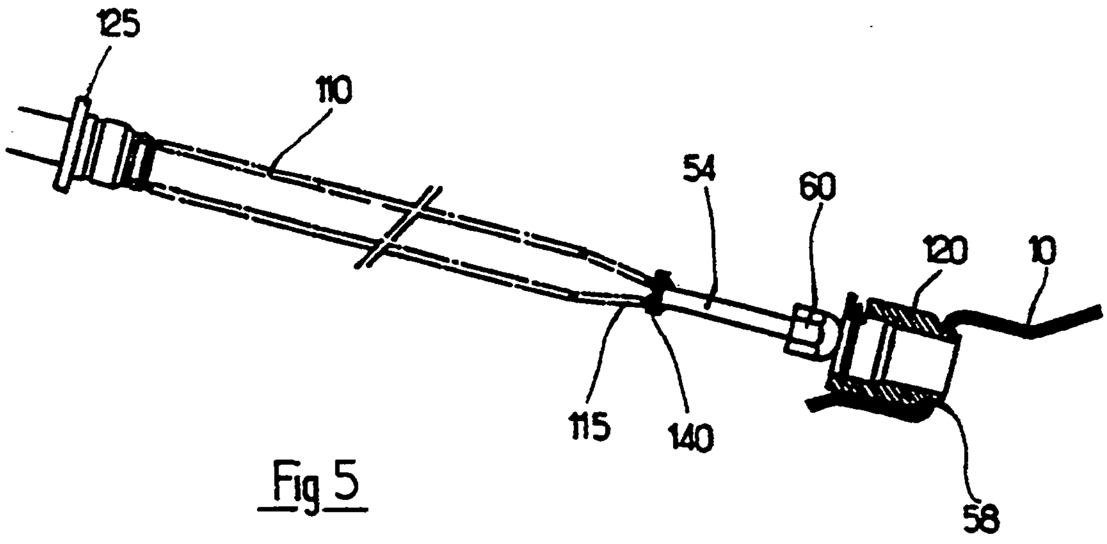


Fig 5